# FASCICULE DE BREVET EUROPEEN

(11) **EP 0 819 559 B1**
(45) Date de publication et mention de la délivrance du brevet: **12.04.2000**
(21) Numéro de dépôt: 97420120.4
(22) Date de dépôt: 16.07.1997
(51) Int. Cl.: B60J 7/20

(54) **Couvre-capote**
Verdeck-Abdeckung
Soft top cover

(30) Priorité: 18.07.1996 FR 9609262
(43) Date de publication de la demande: 21.01.1998
(73) Titulaire: Inoplast, 07340 Saint Desirat (FR)
(72) Inventeur: Bergeron, Denis, 26600 La Roche de Glun (FR); Martin, Laurent, 07340 Peaugres (FR)
(74) Mandataire: Myon, Gérard Jean-Pierre

(56) Documents cités:
- DE-A- 19 522 353
- US-A- 4 783 113
- US-A- 4 971 385

## Description

L'invention a trait à un couvre-capote pour véhicule automobile décapotable.

Un couvre-capote est utilisé dans une automobile décapotable pour recouvrir le coffre de rangement dans lequel est logée la capote du véhicule lorsqu'elle n'est pas déployée au-dessus de l'habitacle, c'est-à-dire lorsque le véhicule est dans une situation décapotée. Un tel couvre-capote est un élément visible du véhicule et appartient à ce titre à la carrosserie de celui-ci. Il a donc à la fois une fonction mécanique de protection de la capote et une fonction esthétique.

En particulier, compte tenu de la forme et des dimensions d'un couvre-capote, il peut être souhaitable, pour respecter le style d'un véhicule, de prévoir que celui-ci est au moins partiellement peint aux couleurs de la carrosserie du véhicule afin de s'intégrer plus harmonieusement à cette carrosserie. D'autre part, un couvre-capote comprend le plus souvent une partie recouverte d'un revêtement, tel que, par exemple, un film en PVC (polychlorure de Vinyl) ou en TPO (tissu enduit de PVC sur une structure polyuréthane) ou un revêtement de cuir ou de tissu.

Compte tenu de la géométrie et des dimensions d'un couvre-capote, il est malaisé de peindre partiellement celui-ci aux couleurs de la carrosserie, car ceci nécessite la pose d'un masque sur les parties ne devant pas être peintes, la manipulation par un robot ou un opérateur d'une pièce possédant déjà partiellement son aspect définitif et donc des risques de rayures des parties finalement visibles sur le véhicule alors que ces parties de couleurs communes sont pourvues d'un revêtement qui peut ne pas résister aux agents chimiques utilisés lors du revêtement aux couleurs de la carrosserie d'une partie du couvre-capote. De plus, les couvre-capotes peuvent être équipés d'accessoires électriques et/ou mécaniques tels qu'un feu stop ou un dispositif de désembuage. Dans tous les cas, ces accessoires doivent être montés a posteriori sur le couvre-capote et nécessitent la manipulation d'un objet de dimensions importantes.

L'invention vise à proposer un couvre-capote pour véhicule automobile pouvant être fabriqué de façon économique et comprenant des zones de couleurs différentes, dont une zone aux couleurs de la carrosserie du véhicule sur lequel il doit être monté, alors que des accessoires électriques et/ou mécaniques peuvent être prévus et facilement montés sur ce couvre-capote.

L'invention concerne un couvre-capote pour véhicule automobile décapotable caractérisé en ce qu'il comprend une structure auto-portante, au moins partiellement recouverte d'un revêtement, et un panneau rapporté, peint aux couleurs de la carrosserie du véhicule et apte à recevoir des éléments accessoires électriques et/ou mécaniques.

Grâce à l'invention, il est possible de revêtir le panneau rapporté aux couleurs de la carrosserie du véhicule avant que celui-ci ne soit monté sur la structure auto-portante, de sorte que celle-ci n'est pas exposée aux projections de peinture en cours de revêtement. De plus, comme le panneau rapporté est apte à recevoir des éléments accessoires et/ou mécaniques, la structure auto-portante est mécaniquement identique pour tous les véhicules d'un modèle donné, quel que soit leur niveau d'équipement qui peut être défini en option. En d'autres termes, tous les éléments variables d'un véhicule à l'autre, tels que la peinture et les équipements accessoires sont portés par le panneau rapporté qui peut être fabriqué lorsque les caractéristiques précises du véhicule commandé sont connues, alors que la structure auto-portante qui est commune à tous les véhicule peut être fabriquée à l'avance et stockée en quantité suffisante pour une production régulière.

Selon un premier aspect avantageux de l'invention, la structure auto-portante comprend une zone périphérique recouverte d'une peinture anti-abrasion. Cette caractéristique supplémentaire permet de conférer au couvre-capote de l'invention une zone d'un aspect différent de la partie de la structure auto-portante recouverte d'un revêtement et du panneau rapporté, de sorte que le couvre-capote paraît formé de trois parties distinctes. De plus, la peinture anti-abrasion permet de résister aux appuis multiples de la capote en position déployée sur cette zone et aux frottements qui en découlent. Ceci dispense le constructeur de mettre en place des patins de frottement destinés à protéger le couvre-capote contre une usure prématurée.

Selon un second aspect avantageux de l'invention, le panneau rapporté comprend au moins un passage de faisceaux électriques. Ce passage de faisceaux électriques, qui n'est pas prévu dans la partie auto-portante, ne risque pas d'en altérer les propriétés mécaniques, alors qu'il peut être ménagé dans le panneau rapporté dont la rigidité lui est conférée par sa fixation à la structure auto-portante. Le passage des faisceaux électriques peut être équipé de câbles en fonction des options du véhicule. Il peut, en particulier, servir à alimenter électriquement un feu stop compris dans le panneau rapporté et par voie de conséquence monté à la partie supérieure arrière du véhicule.

Selon un autre aspect avantageux de l'invention, le panneau rapporté comprend une zone d'assemblage disposée sous la structure auto-portante en position montée et comprenant le passage de faisceaux électriques, de sorte que ce passage de faisceaux électriques est dissimulé, ce qui permet de le protéger contre les intempéries et de maintenir l'aspect esthétique du véhicule. L'invention permet donc de créer un espace entre la structure auto-portante et le panneau rapporté qui constituent les deux peaux d'un corps dans lequel sont logés les faisceaux électriques ou autres équipements.

L'invention sera mieux comprise et d'autres avantages de celle-ci apparaîtront plus clairement à la lumière de la description qui va suivre d'un mode de réalisation d'un couvre-capote pour véhicule automobile conforme à son principe, donnée uniquement à titre d'exemple et faite en référence aux dessins annexés dans lesquels :
- La figure 1 est une vue partielle en perspective éclatée d'un couvre-capote conforme à l'invention et
- La figure 2 est une vue partielle en perspective du couvre-capote de la figure 1, une fois celui-ci assemblé.

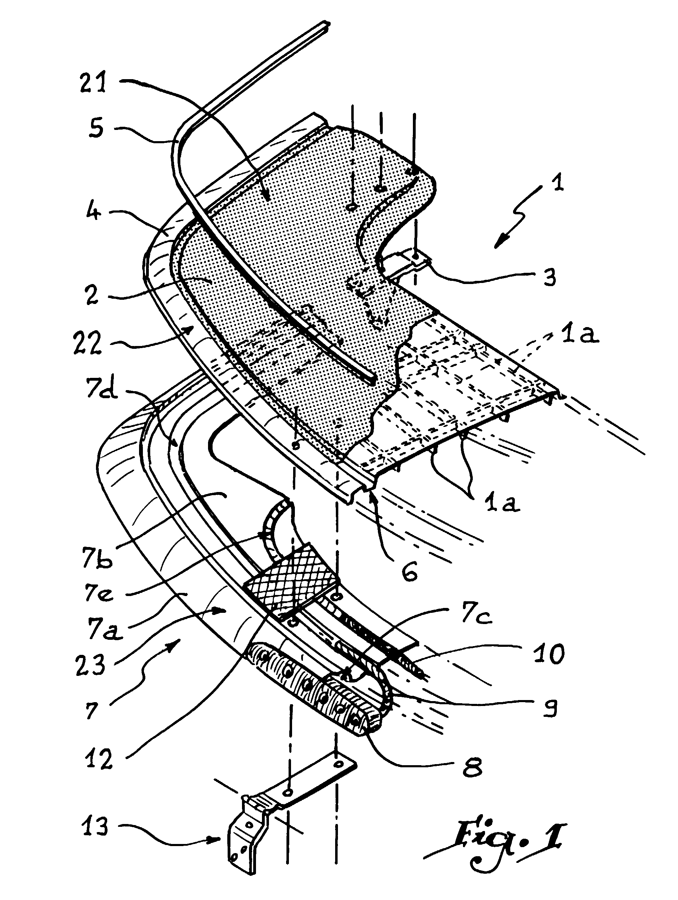

Le couvre-capote de la figure 1 comprend une structure auto-portante 1, qui confère la résistance mécanique souhaitée au couvre-capote, et est pourvue de nervures de rigidification la positionnées sous forme d'un treillis. Cette structure auto-portante reçoit, en décoration, un revêtement 2 déposé par thermo-gainage ou une autre technique (collage ou plaquage) et réalisé à partir d'un film en polychrorure de vinyl (PVC). Ce revêtement pourrait aussi être réalisé en TPO, en cuir ou en tissu. Il a la forme d'une gaine. Cette gaine 2 peut être prévue dans l'une de quatre couleurs de base au choix telle que, par exemple, noire, grise, beige ou blanche, utilisées sur tous les véhicules du modèle.

Des pattes 3 de verrouillage du couvre-capote en position fermée sont montées sur la face inférieure de la structure auto-portante 1 et destinées à coopérer respectivement avec un verrou, par exemple électro-magnétique, non représenté. La structure auto-portante comprend aussi à proximité de son bord périphérique externe une zone 4, non nervurée, revêtue de peinture anti-abrasion, par exemple noire. Un jonc de décoration 5 est prévu pour être inséré dans une rainure 6 située entre la zone 4 et la partie de la structure auto-portante 1 munie des nervures de rigidification.

Un panneau 7, prévu pour être peint aux couleurs de la carrosserie du véhicule, peut être rapporté sur la structure auto-portante et comprend une partie externe 7a visible une fois le couvre-capote installé sur le véhicule, cette partie externe étant revêtue d'une peinture aux couleurs de la carrosserie du véhicule. Le panneau 7 est peint, avant son assemblage sur la structure 1, selon les critères de qualité utilisés pour les éléments les plus visibles d'une carrosserie automobile et désignés habituellement sous le terme "classe A". Le panneau 7 comprend aussi une zone d'assemblage 7b sensiblement plane et destinée à être disposée sous la structure auto-portante 1 lorsque le panneau 7 est rapporté sous la structure auto-portante 1. Les dimensions de la zone d'assemblage 7b sont prévues suffisamment importantes pour assurer un assemblage rigide entre la structure 1 et le panneau 7. Un espace à double peau est ainsi crée entre la structure 1 et le panneau 7.

Selon un aspect avantageux mais non obligatoire de l'invention, un feu stop 8 est logé dans une cavité 7c prévue dans l'épaisseur du panneau 7 et est alimenté électriquement grâce à un faisceau 9 de conducteurs électriques compris dans un passage 7d formant goulotte destinée à le recevoir.

D'autre part, un faisceau 10 de câbles électriques est logé dans un second passage 7e du panneau 7 et permet d'alimenter électriquement un dispositif de désembuage d'une vitre arrière appartenant à la capote du véhicule, ce dispositif n'étant pas représenté. Une ou plusieurs plaques d'insonorisation 12, dont une seule apparaît sur la figure 1, peuvent être montées sur le panneau 7, en particulier sur la zone d'assemblage 7b, de façon à absorber les vibrations qui se propagent dans la cavité dans laquelle est logée la capote du véhicule.

Il apparaît ainsi que les éléments accessoires que sont le feu stop, les faisceaux d'alimentation électrique et les plaques d'insonorisation peuvent être montés sur le panneau rapporté 7 alors que leur nature, leur nombre et leurs dimensions respectives peuvent varier en fonction des options des véhicules. Au contraire, la structure auto-portante 1 n'est pas modifiée en fonction des caractéristiques optionnelles du véhicule et constitue donc un élément commun à tous les véhicules d'un modèle, à la couleur près de son revêtement 2.

Le couvre-capote de l'invention est monté sur la caisse du véhicule au moyen de charnières 13 dont une seule apparaît à la figure 1. On note en particulier que l'on peut prévoir de disposer la zone 7b d'assemblage du panneau 7 entre la structure auto-portante 1 et la charnière 13, alors que des vis de fixation permettent de relier la structure 1 à la charnière 13. Le panneau 7 est ainsi pris en sandwich entre la structure 1 et la charnière 13, ce qui confère une bonne rigidité à l'assemblage ainsi formé. Cependant, il est aussi possible de prévoir que la zone d'assemblage 7b est collée sous la structure auto-portante 1 et que des points de fixation supplémentaires au moyen de vis ou de rivets sont répartis sur la zone 7b.

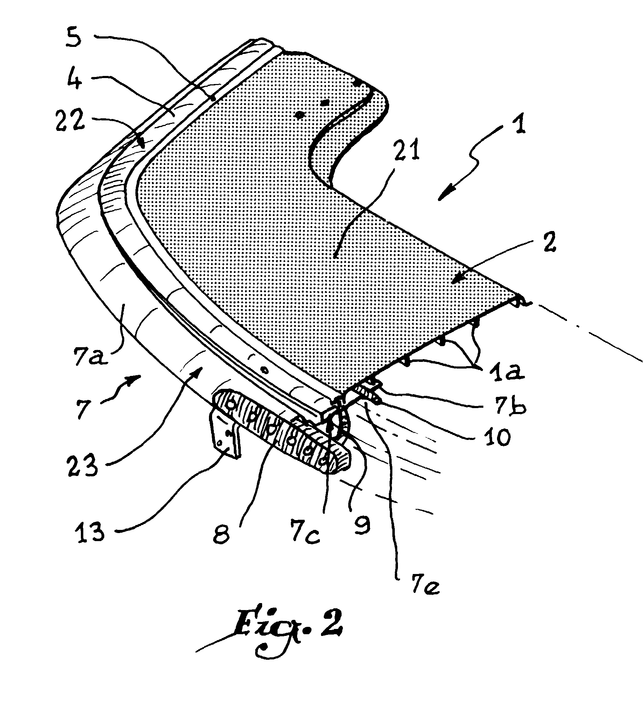

Lorsque le couvre-capote est assemblé et monté sur le véhicule, son aspect extérieur est celui de la figure 2 où il apparaît une zone 21 d'aspect relativement brillant constituée par le revêtement PVC utilisé, une zone 22 d'aspect mat due à la peinture anti-abrasion qui peut être à grains, la zone 22 étant séparée de la zone 21 par le jonc 5 qui peut avoir un aspect chromé. Enfin une troisième zone 23 aux couleurs de la carrosserie en constitue le prolongement et intègre le feu stop 8. Grâce à l'invention, le couvre-capote du véhicule est particulièrement bien intégré à l'esthétique du véhicule alors que sa fabrication reste économique.

Selon un aspect avantageux supplémentaire, l'invention permet à un constructeur automobile de limiter le nombre de références des couvre-capotes montés sur un modèle de véhicules. En effet, les couvre-capote de l'art antérieur comprennent une partie revêtue d'une couleur de base choisie par le client parmi, par exemple, quatre couleurs. D'autre part, si une partie du couvre-capote est peinte aux couleurs de la carrosserie, le client peut choisir entre environ 15 teintes de carrosserie. Il existe donc 4 x 15 = 60 possibilités de choix et le constructeur doit référencer ces 60 types de couvre-capote. Grâce à l'invention, dans une situation analogue avec 4 couleurs de base et 15 teintes de carrosserie, le constructeur peut référencer 4 structures auto-portantes et 15 panneaux rapportés, c'est-à-dire 19 pièces en tout, la sélection et l'assemblage d'une structure auto-portante et d'un panneau pouvant être effectués en bordure de chaîne de montage du véhicule.

En outre, l'invention permet de limiter le coût des rebuts. En effet, si un panneau 7 s'avère présenter un défaut de revêtement, il n'est pas monté sur une structure auto-portante mais la structure correspondante peut être utilisée avec un autre panneau rapportée alors que, si le couvre-capote était monobloc, l'ensemble de ces pièces devrait être mis au rebut.

Cet avantage est aussi exploitable lors des répérations du véhicule, par exemple suite à un accident, car seule la partie détériorée du couvre-capote, à savoir la structure 1 ou le panneau 7, est changée lorsque cela est possible.

## Revendications

1. Couvre-capote pour véhicule automobile décapotable, caractérisé en ce qu'il comprend une structure (1) auto-portante, au moins partiellement recouverte d'un revêtement (2), et un panneau (7) rapporté, peint aux couleurs de la carrosserie du véhicule et apte à recevoir des éléments accessoires (8, 9, 10, 12) électriques et/ou mécaniques.

2. Couvre-capote selon la revendication 1, caractérisé en ce que ladite structure (1) auto-portante comprend une zone périphérique (4) recouverte d'une peinture anti-abrasion de couleur foncée.

3. Couvre-capote selon la revendication 2, caractérisé en ce que ladite zone périphérique (4) est séparée dudit revêtement (2) par un jonc (5) de décoration.

4. Couvre-capote selon l'une des revendications 1 à 3, caractérisé en ce que ledit panneau (7) rapporté comprend au moins un passage (7d, 7e) de faisceaux électriques (9, 10).

5. Couvre-capote selon la revendication 4, caractérisé en ce que ledit panneau (7) rapporté comprend un feu stop (8).

6. Couvre-capote selon la revendication 4, caractérisé en ce que ledit panneau (7) rapporté comprend un dispositif de désembuage d'une vitre arrière appartenant à ladite capote.

7. Couvre-capote selon l'une des revendications 4 à 6, caractérisé en ce que ledit panneau (7) rapporté comprend une zone d'assemblage (7b) disposée sous ladite structure auto-portante (1) en position montée et comprenant ledit passage (7d, 7d) de faisceaux électriques (9, 10).

8. Couvre-capote selon l'une des revendications 1 à 7, caractérisé en ce que ledit panneau (7) rapporté porte des éléments d'insonorisation (12).

9. Couvre-capote selon la revendication 1, caractérisé en ce qu'il est monté sur la caisse dudit véhicule automobile par au moins une charnière (13) solidaire à la fois de ladite structure (1) auto-portante et dudit panneau (7) rapporté.

## Patentansprüche

1. Verdeck-Abdeckung für ein Kabriolett, dadurch gekennzeichnet, daß sie eine selbsttragende Konstruktion (1), die zumindest teilweise mit einer Verkleidung (2) bedeckt ist, und eine angefügte Tafel (7) umfaßt, die in den Farben der Fahrzeugkarosserie gestrichen ist und elektrische und/oder mechanische Zubehörelemente (8, 9, 10, 12) aufnehmen kann.

2. Verdeck-Abdeckung nach Anspruch 1, dadurch gekennzeichnet, daß die selbsttragende Konstruktion (1) einen mit einer verschleißfesten dunklen Farbe versehenen Umfangsbereich (4) enthält.

3. Verdeck-Abdeckung nach Anspruch 2, dadurch gekennzeichnet, daß der Umfangsbereich (4) durch eine Zierleiste (5) von der Verkleidung (2) getrennt ist.

4. Verdeck-Abdeckung nach einem der Ansprüche 1 bis 3, dadurch gekennzeichnet, daß die angefügte Tafel (7) mindestens einen Durchgang (7d, 7e) für elektrische Leitungsbündel (9, 10) umfaßt.

5. Verdeck-Abdeckung nach Anspruch 4, dadurch gekennzeichnet, daß die angefügte Tafel (7) eine Bremsleuchte (8) enthält.

6. Verdeck-Abdeckung nach Anspruch 4, dadurch gekennzeichnet, daß die angefügte Tafel (7) eine Vorrichtung zur Beschlagentfernung eines zu der Abdeckung gehörenden Rückfensters umfaßt.

7. Verdeck-Abdeckung nach einem der Ansprüche 4 bis 6, dadurch gekennzeichnet, daß die angefügte Tafel (7) einen Montagebereich (7b) umfaßt, der im montierten Zustand unter der selbsttragenden Konstruktion (1) angeordnet ist und den Durchgang (7d, 7e) für elektrische Leitungsbündel (9, 10) umfaßt.

8. Verdeck-Abdeckung nach einem der Ansprüche 1 bis 7, dadurch gekennzeichnet, daß die angefügte Tafel (7) Schalldämpfungselemente (12) aufweist.

9. Verdeck-Abdeckung nach Anspruch 1, dadurch gekennzeichnet, daß sie durch mindestens ein Scharnier (13), das sowohl mit der selbsttragenden Konstruktion (1) als auch mit der angefügten Tafel (7) fest verbunden ist, an dem Kraftfahrzeugaufbau angebracht ist.

## Claims

1. Hood for a convertible motor vehicle, characterised in that it comprises a self-fitting structure (1), at least partially covered with a cover (2), and a separate panel (7), painted in the colours of the vehicle's coachwork and capable of accommodating electrical and/or mechanical accessory elements (8, 9, 10, 12).

2. Hood according to claim 1, characterised in that said self-fitting structure (1) comprises a peripheral zone (4) covered with a dark, anti-abrasion paint.

3. Hood according to claim 2, characterised in that said peripheral zone (4) is separated from said cover (2) by a decorative rush (5).

4. Hood according to one of claims 1 to 3, characterised in that said separate panel (7) comprises an least one passage (7d, 7e) for electrical looms (9, 10).

5. Hood according to claim 4, characterised in that said separate panel (7) comprises a stoplight (8).

6. Hood according to claim4, characterised in that said separate panel comprises a wiper device for a rear window which is part of said hood.

7. Hood according to one of claims 4 to 6, characterised in that said separate panel (7) comprises a fitting zone (7b), disposed under said self-fitting structure (1) in the fitted position and comprising said passage (7d, 7d) for electrical looms (9, 10).

8. Hood according to one of claims 1 to 7, characterised in that said separate panel (7) carries sound-proofing elements (12).

9. Hood according to claim 1, characterised in that it is mounted on the body of said motor vehicle by at least one hinge (13), which is integral both with said self-fitting structure (1) and with said separate panel (7).
